(19) Europäisches Patentamt / European Patent Office / Office européen des brevets

(11) **EP 1 962 101 B1**

(12) **FASCICULE DE BREVET EUROPEEN**

(45) Date de publication et mention
de la délivrance du brevet:
**07.10.2009 Bulletin 2009/41**

(51) Int Cl.:
***G01S 1/00*** *(2006.01)*

(21) Numéro de dépôt: **08101907.7**

(22) Date de dépôt: **22.02.2008**

(54) **Procédé et système de surveillance de boucles de poursuite de code dans un récepteur de positionnement par satellites**

Überwachungsverfahren und -system von Schleifen der Code-Verfolgung in einem satellitengesteuerten Positionsempfänger

Method and system of monitoring code-tracking loops in a satellite positioning receiver

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **22.02.2007 FR 0753436**

(43) Date de publication de la demande:
**27.08.2008 Bulletin 2008/35**

(73) Titulaire: **SAGEM DEFENSE SECURITE**
**75015 Paris (FR)**

(72) Inventeurs:
• **Bouvet, Denis**
**75015 PARIS (FR)**
• **Artault, Alexandre**
**75015 PARIS (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
**EP-A- 1 143 652          EP-A1- 1 598 677**
**US-A- 5 737 362          US-A- 6 141 373**
**US-A1- 2002 034 218      US-A1- 2004 095 957**

**Description**

## DOMAINE TECHNIQUE GENERAL

L'invention est relative aux récepteurs de positionnement par satellites et concerne plus précisément l'amélioration des performances des boucles de poursuite mises en oeuvre dans de tels récepteurs.

L'invention est notamment applicable aux récepteurs des signaux transmis par les systèmes GPS, Glonass, Galileo et autres systèmes analogues de positionnement par satellites.

## ETAT DE LA TECHNIQUE

Un récepteur de positionnement par satellites utilise les signaux émis par une pluralité de satellites en orbite autour de la terre.

C'est notamment au travers d'une pluralité de canaux, chacun associé à un satellite que la poursuite d'un satellite (poursuite d'un signal d'un satellite) va être mise en place.

Chacun des satellites émet sur une ou plusieurs fréquences données un signal modulé en phase par la combinaison d'un code d'étalement pseudo-aléatoire et d'un message de navigation contenant entre autres les éphémérides des satellites (c'est-à-dire les éléments définissant leur orbite et leurs variations en fonction du temps). Le signal peut également être modulé par une sous-porteuse, selon les techniques BOC (en anglais, *« Binary Offset Carrier »)* et dérivées.

Le positionnement par satellites consiste à mesurer le temps de propagation du signal émis par les satellites jusqu'à son arrivée à l'antenne du récepteur.

Ces temps de propagation multipliés par la vitesse de transmission du signal donnent les distances satellite-récepteur (plus connues par l'homme du métier sous le nom de « pseudo-distances »).

Celles-ci associées à la position des satellites calculée grâce aux éphémérides, permettent de calculer la position du récepteur et le décalage de son horloge par rapport à celles des satellites.

Il est à noter que plus le nombre de satellites poursuivis simultanément est grand, meilleure sera la précision du calcul de position. Ce nombre est directement lié au nombre de canaux de poursuite du signal dont disposent les récepteurs de positionnement par satellites.

Il est à noter que pour un système de positionnement donné, les signaux transmis par un satellite donné se distinguent, soit par la fréquence de la porteuse, soit par le code pseudo-aléatoire qui module cette porteuse. Ils peuvent aussi se distinguer par les caractéristiques de leur sous-porteuse éventuelle.

Dans la suite du présent texte, on se place dans le contexte de la réception des signaux utilisant une modulation de phase à deux états (en anglais, « Binary Phase Shift Keying », (BPSK)), telle que celle mise en oeuvre par le système GPS pour la transmission des signaux civils utilisant un code C/A, et des signaux militaires utilisant un code P(Y).

Le principe de la mesure consiste à générer pour chaque satellite visible par le récepteur une réplique locale du code pseudo-aléatoire émis par le satellite sur une fréquence proche de, ou mieux égale à, la fréquence du signal reçu (transposée à basse fréquence par un module de « Traitement Radio Fréquence » non discuté) et à retarder ce code local jusqu'à ce qu'il soit aligné sur le code du signal du satellite. La valeur de ce retard mesurée grâce à l'horloge du récepteur correspond au temps de propagation du signal.

L'alignement des deux codes s'observe par la corrélation des codes reçu et généré et est entretenu en permanence grâce à une boucle d'asservissement dite boucle de poursuite de code. Tel que connu, chaque canal de poursuite du récepteur comprend trois corrélateurs, alimentés par une réplique ponctuelle du code (corrélateur dit *« Prompt »*), décalée en avance de D/2 chip du code d'étalement (corrélateur dit *«Early»)* et décalée de D/2 chip en retard (corrélateur dit *« Late »*).

On appellera ces trois corrélateurs « corrélateurs de pilotage ».

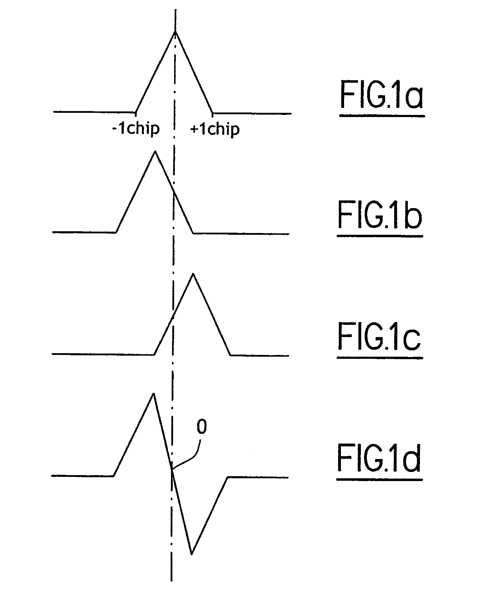

Les figures 1a, 1b et 1c illustrent respectivement les résultats issus du corrélateur *« Prompt »*, du corrélateur *« Early »* et du corrélateur *« Late »*.

La figure 1d est la fonction caractéristique *«Early»* moins *«Late»* (différence entre les résultats issus des corrélateurs *« Early »* et *« Late »*).

La boucle de poursuite du code maintient en permanence le corrélateur *« Prompt »* sur le pic de corrélation (cf. figure 1a) en asservissant la génération de la réplique du code sur le « zéro », noté 0 sur la figure 1d, de la fonction caractéristique *« Early »* moins *« Late »*. Ce « zéro » correspond au sommet de la corrélation *« Prompt »* (cf. figure 1a).

Il s'agit ici du cas où le signal satellite ne présente qu'un seul trajet.

Différentes sources d'erreur peuvent affecter la mesure des pseudo-distances et dégrader la précision du calcul de position du récepteur.

Une des erreurs principales provient des trajets multiples ou multitrajets.

En effet, lorsque le signal émis par le satellite est réfléchi avant d'atteindre le récepteur, le résultat de corrélation des signaux indirects vient s'ajouter à celui du signal du trajet direct. Deux cas sont alors possibles.

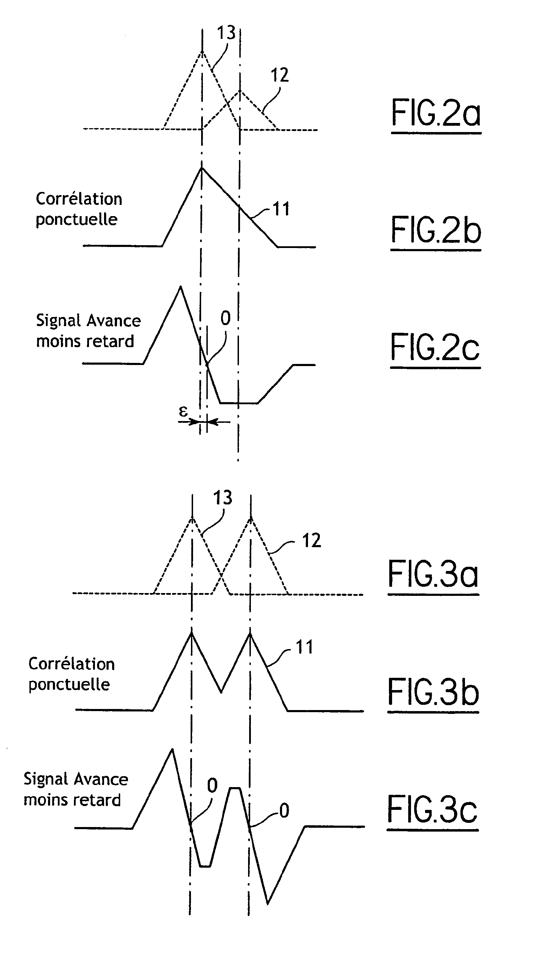

Le premier cas de multitrajet dit *« in-the-chip »* est illustré par les figures 2a, 2b et 2c.

La figure 2a représente les fonctions de corrélation 12 et 13 respectivement issues d'un trajet direct et d'un trajet réfléchi (trajet indirect).

Sur l'exemple illustrée par les figures 2a, 2b et 2c, le trajet supplémentaire parcouru par les ondes réfléchies est suffisamment court pour que la fonction de corrélation 12 du signal réfléchi interfère avec la fonction de corrélation 13 du trajet direct. La forme de la fonction de corrélation 11 issue du corrélateur *« Prompt »*, telle qu'illustrée par la figure 2b est alors déformée ainsi que la courbe caractéristique « *Early* » moins « *Late* » tel que cela est illustré par la figure 2c.

L'erreur de poursuite du code $\epsilon$ est typiquement comprise entre plus ou moins un demi-chip. Ce premier cas a déjà fait l'objet de nombreuses recherches et différentes solutions fondées sur la corrélation étroite ou la déformation du pic de corrélation ont vu le jour.

Le second cas de multitrajet dit *« out-of-the-chip »* est illustré par les figures 3a, 3b et 3c.

La figure 3a, représente les fonctions de corrélation 12 et 13 respectivement issues d'un trajet direct et d'un trajet indirect.

L'écart entre le trajet indirect et le trajet direct est dans cet exemple supérieur à (1 +D/2) chip (tel que connu on a D = 1, l'écart est alors égal à un chip et demi).

Dans l'exemple illustré par les figures 3a, 3b et 3c, les fonctions de corrélation 12 et 13 sont suffisamment distinctes de sorte que le zéro de la fonction caractéristique « *Early »* moins « *Late »* ne soit pas décalé.

Pour peu que la poursuite du signal soit asservie sur le pic de corrélation 13 du trajet direct, les trajets indirects ne provoquent pas d'erreur sur la mesure de la pseudo-distance. Il s'agit donc, à l'acquisition, de rechercher les signaux satellites en balayant au moins avec le corrélateur « *Prompt »* et de manière optimale avec tous les corrélateurs disponibles dans le récepteur, le domaine de recherche en code du plus tôt (ou plus proche) vers le plus tard (ou plus éloigné) pour garantir de détecter d'abord l'énergie du trajet direct. La poursuite du signal s'asservira ensuite sur le premier pic de corrélation détecté.

Cependant, dès que le trajet direct est masqué et que seul un signal réfléchi parvient au récepteur, l'acquisition et la poursuite du signal risquent de se verrouiller sur le pic de corrélation du trajet indirect.

Ceci introduit une erreur sur la pseudo-distance, et par là même une erreur de calcul de position.

Pour le second cas, une solution connue consiste à dédier un canal, dit canal d'appoint, à la recherche d'énergie amont.

Pour chacun des satellites poursuivis par les autres canaux du récepteur, on effectue une recherche du signal en avance du pic sur lequel est asservie la poursuite et on rapproche progressivement la recherche du pic courant.

Si aucune énergie n'est détectée, le canal dédié passe au satellite suivant. Une fois que l'ensemble des satellites poursuivis a été entièrement testé, le canal dédié reprend sa recherche d'énergie au premier satellite et ainsi de suite.

Un dispositif pour la réduction des composantes multivoies en réception d'un signal CDMA, notamment pour des récepteurs GPS, est connu de EP 1 143 652.

Cette approche présente cependant l'inconvénient d'immobiliser un canal qui pourrait poursuivre un satellite et apporter une mesure supplémentaire. Elle introduit, en outre un délai entre la réapparition du trajet direct et la détection par le canal d'appoint, et donc une invalidation retardée de la mesure erronée.

## PRESENTATION DE L'INVENTION

Afin de remédier aux inconvénients des solutions connues pour traiter le second cas des erreurs de poursuite du type évoqué ci-dessus, l'invention propose selon un premier aspect un procédé de surveillance continue d'une boucle de poursuite d'un signal reçu d'un satellite, ledit signal étant acquis par un récepteur de positionnement par satellites au travers d'un canal associé audit satellite, ladite boucle étant pilotée par des résultats de corrélation, déterminés au moyen de corrélateurs de pilotage, centrés sur un pic de corrélation du signal reçu et prenant en considération le signal reçu et des signaux de réplique décalés temporellement les uns par rapport aux autres, caractérisé en ce qu'on détermine une pluralité d'énergies au moyen d'une pluralité de corrélateurs avancés de surveillance prenant en considération le signal reçu et des signaux de réplique temporellement avancés par rapport aux signaux de réplique utilisés par les corrélateurs de pilotage.

D'autres caractéristiques du procédé selon le premier aspect de l'invention sont les suivantes :

- les signaux de réplique sont décalés les uns par rapport aux autres de DE/2 chip, DE étant typiquement égal à un, en ce que les signaux de réplique $S_{RC}$ et $S_{RE}$ sont décalés l'un par rapport à l'autre de un chip, et en ce que les signaux sont décalés les uns par rapport aux autres de D/2 chip, D étant typiquement égal à 1 ;
- le procédé comprend en outre une comparaison, au moyen d'un détecteur, de chacune des énergies issues des résultats de corrélation obtenus au moyen des corrélateurs avancés de surveillance à un seuil de manière à surveiller que le pic de corrélation sur lequel sont centrés les corrélateurs de pilotage est relatif au trajet direct du signal reçu ;

- le seuil est fonction de l'estimation de l'énergie du bruit en sortie des corrélateurs et de la probabilité de fausse alarme allouée au détecteur ;
- dans le cas où une énergie parmi les énergies issues des résultats de corrélation obtenus par les corrélateurs de surveillance d'un canal est supérieure ou égale au seuil, on invalide les mesures associées au satellite poursuivi pour ne pas les utiliser notamment dans le calcul de la position du récepteur ;
- dans le cas où une énergie parmi les énergies déterminées par les corrélateurs de surveillance est supérieure ou égale au seuil, on relance l'acquisition du signal en initialisant ladite acquisition en avance du corrélateur ayant détecté l'énergie supérieure audit seuil ;
- dans le cas où une énergie de corrélation parmi les énergies déterminées sur les corrélateurs de surveillance d'un canal est supérieure ou égale au seuil, on décale la poursuite du signal en centrant les corrélateurs de pilotage sur l'emplacement du corrélateur de surveillance pour lequel on a détecté le pic d'énergie de corrélation ;
- les signaux de répliques alimentant les corrélateurs de surveillance et de poursuite sont obtenus par décalage temporel au moyen d'un registre à décalage du signal de réplique ;
- les énergies issues des résultats de corrélation obtenus au moyen des corrélateurs de surveillance sont calculées en cumulant N fois, de manière non cohérente, l'énergie de corrélation calculée de manière cohérente sur k millisecondes, ladite énergie de corrélation cohérente étant la somme du résultat de corrélation en phase élevé au carré avec le résultat de corrélation en quadrature élevé au carré.
- les variables k et N sont au moins fonction de la probabilité de fausse alarme allouée au détecteur et sont typiquement égales 5ms et 20 respectivement ;
- les signaux de réplique alimentant les corrélateurs de poursuite et de surveillance sont adjacents ;
- le procédé de l'invention est mis en oeuvre dans chaque canal pour la poursuite d'un signal reçu d'un satellite.

Selon un second aspect, l'invention propose un récepteur de positionnement par satellites comprenant sur un canal associé à un satellite, comprenant des boucles de poursuite d'un signal reçu d'un satellite, des corrélateurs de pilotage centrés sur un pic de corrélation du signal reçu et prenant en considération le signal reçu et des signaux de réplique décalés temporellement les uns par rapport aux autres, caractérisé en ce qu'il comprend en outre une pluralité de corrélateurs avancés de surveillance prenant en considération le signal reçu et des signaux de réplique temporellement avancés par rapport aux signaux de réplique utilisés par les corrélateurs de pilotage.

## PRESENTATION DES FIGURES

D'autres caractéristiques et avantages de l'invention ressortiront encore de la description qui suit, laquelle est purement illustrative et non limitative et doit être lue en regard des dessins annexés sur lesquels, outre les figures 1a, 1b, 1c 1d, 2a, 2b, 2c et 3a, 3b, 3c déjà discutées :

- la figure 4 est un schéma simplifié des moyens utilisés pour la mise en oeuvre du procédé selon le premier aspect,
- la figure 5 illustre la position relative des signaux de réplique alimentant les corrélateurs par rapport au pic de corrélation sur lequel la poursuite est asservie.

## DESCRIPTION D'UN OU PLUSIEURS MODES DE REALISATION

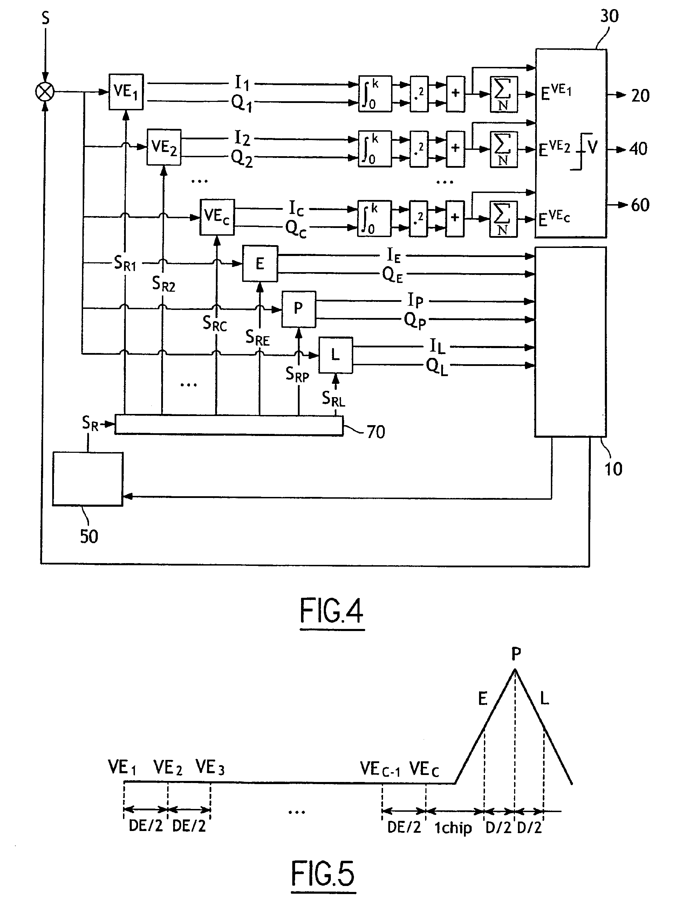

La figure 4 est un schéma simplifié des moyens utilisés pour la mise en oeuvre du procédé selon le premier aspect de l'invention.

Le procédé est mis en oeuvre dans un récepteur de positionnement par satellites et notamment dans un module de poursuite intégré dans un tel récepteur.

Un tel récepteur est apte à fournir une mesure de sa position.

Le procédé permet notamment la surveillance continue de la poursuite du signal S émis par un satellite, ce signal étant acquis par le récepteur de positionnement au travers d'un canal associé au satellite.

Tel que connu en soi, le verrouillage des boucles de poursuite de code s'opère suite à l'acquisition du signal émis par le satellite.

L'acquisition (non discutée en détail dans le présent texte) consiste à balayer l'espace code-fréquence en réalisant la corrélation entre un signal généré localement et le signal reçu jusqu'à détecter un pic d'énergie de corrélation.

Une fois le pic de corrélation détecté, les boucles de poursuite du code et de la porteuse du signal sont asservies sur ce pic.

Lors de la poursuite du signal, les boucles de code et de porteuse sont pilotées par des déterminants, issus des résultats de corrélation $I^E$, $Q^E$, $I^P$, $Q^P$, $I^L$, $Q^L$ calculés entre le signal reçu et un signal de réplique $S_R$ généré au moyen d'un générateur 50 de signal de réplique $S_R$ intégré dans le récepteur.

Ces résultats de corrélation sont déterminés au moyen des corrélateurs de pilotage E, P, L prenant en considération le signal de réplique $S_R$ décalé successivement de D/2 chip.

Les corrélateurs utilisent donc des signaux de répliques $S_{RE}$, $S_{RP}$ et $S_{RL}$ décalés temporellement les uns par rapport aux autres.

Il est à noter que le signal de réplique $S_R$ est un signal de code.

Ces déterminants sont à interpréter comme une fonction d'erreur de la boucle de poursuite.

Selon l'erreur de code estimée, on procède à un recalage de la réplique du code générée de manière à ce que le corrélateur « *Prompt* » P soit toujours centré sur le pic de corrélation du signal.

Il est à noter que le récepteur peut poursuivre une pluralité de satellites via une pluralité de canaux.

Tel que connu en soi, les récepteurs de positionnement par satellites du type GPS mettent en oeuvre de huit à vingt-quatre canaux pour la poursuite (afin notamment de poursuivre les signaux satellites sur les deux fréquences porteuses que le système GPS utilisent).

Le procédé de l'invention permet de surveiller que la poursuite du signal est bien verrouillée sur le pic de corrélation relatif au trajet direct du signal reçu, et non pas sur un pic de corrélation d'un trajet indirect.

Le procédé met en oeuvre une détection d'énergie amont apte à déceler si la poursuite est verrouillée sur le pic de corrélation d'un trajet indirect distinct du pic principal.

Comme nous l'avons déjà mentionné, lorsque le retard du trajet indirect par rapport au trajet direct est typiquement supérieur à un chip et demi de code, le risque est de verrouiller la poursuite du signal sur le pic de corrélation d'un trajet indirect.

L'utilisation seule des corrélateurs de pilotage E, P et L utilisés pour la poursuite ne peut remédier à ce problème.

Il s'agit du cas « out-of-the-chip », précédemment présenté.

Ainsi, afin de trouver une énergie que les corrélateurs pilotage E, P, L ne peuvent détecter, on détermine pour chaque canal associé à un satellite, une pluralité d'énergies $E^{VE1}$, $E^{VE2}$..., $E^{VEC}$ au moyen d'une pluralité de corrélateurs avancés $VE_1$, $VE_2$, ..., $VE_C$, avec C entier supérieur à 1 en amont (en avance) des corrélateurs E, P, L.

Ces corrélateurs $VE_1$, $VE_2$, ..., $VE_c$ sont appelés dans le présent texte « corrélateurs de surveillance ».

Le nombre de corrélateurs de surveillance est par exemple égal à 30.

Les corrélateurs $VE_1$, $VE_2$, ..., $VE_c$ sont utilisés pour surveiller, en continu, sur chacun des satellites poursuivis et pour chaque fréquence porteuse du signal l'apparition d'énergie d'un signal satellite en avance - amont - du signal poursuivi (on notera que dans le cas d'un récepteur GPS exploitant les signaux de deux porteuses, connues de l'homme du métier par L1 et L2, on peut surveiller l'apparition de l'énergie sur deux canaux de poursuite).

La détermination d'une pluralité d'énergies au moyen des corrélateurs de surveillance $VE_1$, $VE_2$, ..., $VE_C$ est effectuée en prenant en considération des répliques $S_{R1}$, ..., $S_{RC}$ temporellement avancées par rapport aux signaux de réplique $S_{RE}$, $S_{RP}$ et $S_{RL}$ alimentant les corrélateurs de pilotage E, P L.

Les signaux de réplique $S_{R1}$, ..., $S_{RC}$ sont obtenus en générant un signal de réplique $S_R$ au moyen du générateur 50.

Ce signal de réplique $S_R$ alimente un registre à décalage 70 qui va décaler ce signal.

Le signal de réplique $S_R$ décalé au moyen du registre à décalage 70 alimente alors successivement les corrélateurs $VE_1$, $VE_2$, ..., $VE_c$.

Le décalage initié au signal de réplique $S_R$ est fonction de l'erreur de poursuite du code mesurée par les corrélateurs de pilotage et prend en compte l'écart entre le premier corrélateur de surveillance $VE_1$ et le corrélateur « *Prompt* », P.

La figure 5 illustre la position relative des corrélateurs par rapport au pic de corrélation sur lequel la poursuite est asservie.

Le signal de réplique $S_{RC}$ alimentant le corrélateur $VE_C$ est avancé par rapport au signal de réplique $S_{RP}$ alimentant le corrélateur « *Prompt* », P de (1 +D/2) chip (typiquement un chip et demi).

Le décalage entre les signaux de réplique alimentant les corrélateurs de surveillance pourra être égal à un demi-chip du code d'étalement du signal poursuivi S, mais cette valeur n'est pas limitative.

En effet, l'espacement entre les signaux de réplique des corrélateurs de pilotage peut être différent de l'espacement entre les signaux de réplique des corrélateurs de surveillance.

En outre, les corrélateurs de surveillance sont liés aux corrélateurs de pilotage E, P, L, puisque la génération du signal de réplique $S_R$ est pilotée par l'asservissement du corrélateur P sur le pic de corrélation du signal.

Pour chaque canal de poursuite, les résultats de corrélation issus des corrélateurs de pilotages E, P, L servent notamment d'entrée à la boucle d'asservissement en code 10 et permettent de dériver la pseudo-distance nécessaire au calcul de la position du récepteur.

Les énergies issues des corrélateurs $VE_1$, $VE_2$, ..., $VE_C$ alimentent un bloc de décision 30 qui si besoin va invalider les mesures (et notamment la pseudo-distance) associées au satellite poursuivi, et empêcher leur utilisation notamment dans le calcul de la position du récepteur.

Pour chacun de ces corrélateurs avancés (VE$_1$ à VE$_C$) de chaque canal poursuivant le signal émis par un satellite donné, on somme sur k millisecondes les résultats de corrélation en phase I$_i$ (i=1,...,C) et en quadrature Q$_i$ (i=1,...,C) (la durée de cette intégration cohérente peut être différente de celle nécessaire pour calculer les déterminants utilisés pour la poursuite du signal).

Sans connaissance préalable du message de navigation, k est limité à 20ms, soit la durée d'un bit du message émis par les satellites. On choisira cependant par exemple k= 5ms.

Cette limitation peut néanmoins être levée par des stratégies connues sous le nom de *« data wipe off »* (non détaillées ici).

Les énergies dites élémentaires $E_k^{VE_j}$ , $j$ = 1,...,C, sont calculées de la manière suivante

$$E_k^{VE_j} = \left( \sum_{i=1}^{k} I_i \right)^2 + \left( \sum_{i=1}^{k} Q_i \right)^2, \quad j = 1,\ldots,C.$$

Puis, toujours pour chaque corrélateur avancé (VE$_1$ à VE$_c$), on cumule dans une somme de N énergies élémentaires consécutives $E_k^{VE_j}$ de manière à obtenir l'énergie résultante $E^{VE_j}$ de la manière suivante

$$E^{VE_j} = \sum_{k=1}^{N} E_k^{VE_j} \quad j = 1,\ldots,C.$$

On choisira N de manière à minimiser la probabilité de non détection de l'invention, on choisira par exemple N=20.

On note que les valeurs de k et N sont de manière générale au moins fonction de la PFA allouée au détecteur.

Pour chaque corrélateur, les énergies $E^{VE_j}$ sont comparées à un seuil V via le bloc décisionnel 30 comprenant un détecteur de multitrajet.

Selon un mode de réalisation possible, ce seuil de détection V est fixé en fonction de la Probabilité de Fausse Alarme (PFA) allouée au détecteur et de l'énergie du bruit $\sigma_b^2$, estimée pour chaque canal à partir des énergies élémentaires $E_n^{VE_j}$ calculées sur chaque corrélateur (cette estimation étant lissée dans le temps et figée lorsqu'on détecte du signal sur un des corrélateurs).

La PFA permet de régler la sensibilité du détecteur. Plus elle sera faible et moindres seront les chances que le bruit seul en sortie des corrélateurs conduise à une détection d'énergie et donc à l'invalidation de la mesure, alors que la poursuite du signal est bien verrouillée sur le pic de corrélation du trajet direct.

Le seuil V est donc spécifique à chaque canal, puisqu'il dépend de l'énergie du bruit mesurée sur chaque canal.

Puisque l'énergie $E^{VE_j}$ est la somme de 2N variables aléatoires gaussiennes de variance $\sigma_b^2$, $E^{VE_j}/\sigma_b^2$ suit une loi du chi 2 à 2N degrés de liberté centrée lorsqu'il n'y a que du bruit en sortie de corrélateur.

Connaissant la PFA, on calcule le paramètre $\alpha$ en inversant la formule suivante :

$$\text{PFA}(\alpha) = \int_{\alpha}^{+\infty} p(z)dz.$$

où

$$p(z) = \frac{z^{N-1}\exp(-z/2)}{2^N \Gamma(N)} \text{ et } \Gamma(y) = \int_0^{+\infty} \exp(-z)z^{y-1}dz$$

et le seuil V est donné par

$$V = \alpha \, \sigma_{b\_est}{}^2,$$

où $\sigma b\_est^2$ est l'estimation de l'énergie du bruit $\sigma b^2$ en sortie des corrélateurs.

Lorsque l'énergie $E^{VEj}$ dépasse le seuil fixé V, cela signifie qu'il existe un signal (et pas seulement du bruit) en avance par rapport au signal actuellement poursuivi.

En d'autres termes, comme un trajet réfléchi arrive toujours en retard par rapport au trajet direct, cela signifie que la poursuite du signal satellite est actuellement asservie sur un pic de corrélation correspondant à un multitrajet et fournit donc une mesure erronée.

Cette détection 30 permet d'invalider 20 les mesures résultantes (pseudo-distance, pseudo-vitesse et phase).

Par ailleurs, selon différents modes de réalisation possibles, après avoir invalidé la mesure courante on peut :

- relancer l'acquisition 40 du signal en démarrant la recherche en avance de l'énergie nouvellement détectée pour être certain d'asservir la poursuite sur le pic du trajet direct et non sur celui du trajet réfléchi, ou
- décaler 60 la poursuite du signal en centrant les corrélateurs de pilotage E, P, L sur l'emplacement du corrélateur de surveillance pour lequel on a détecté le pic d'énergie de corrélation.

Ainsi, comparé à la recherche séquentielle d'énergie amont telle que connue (où un canal GPS dédié teste un à un les satellites poursuivis en faisant une recherche d'énergie amont par rapport au pic poursuivi sur chacun des autres canaux du récepteur GPS), dans le cadre de l'invention la capacité de détection est continue et l'invalidation de la ou les mesures erronées issues d'un trajet indirect est immédiate.

Ainsi l'invention exploite sur chaque canal de poursuite d'un signal émis par un satellite les sorties de C corrélateurs $VE_1$, $VE_2$, ..., $VE_C$, placés en avance des corrélateurs de pilotage E, P, L utilisés dans un récepteur pour calculer les déterminants nécessaires à la poursuite du code, de la porteuse et de la phase des signaux émis par les satellites.

Les performances du récepteur GPS s'en trouvent améliorées.

Par ailleurs, l'invention permet de détecter les trajets indirects dont l'écart avec le trajet direct est, dans le cas d'un récepteur GPS muni de corrélateurs espacés de un demi chip d'au moins 45 m en code P(Y) et 450 m en code C/A (puisque un chip de code équivaut à 30 m en P(Y) et 300 m en C/A).

En outre, l'invention n'est pas seulement limitée au procédé mais s'étend également aux systèmes disposant de moyens pour mettre en oeuvre le procédé selon le premier aspect.

Ces moyens sont en particulier un registre à décalage 70 apte à décaler un signal de réplique $S_R$ obtenu au moyen d'un générateur 50 pour obtenue une pluralité de signaux de réplique alimentant une pluralité de corrélateurs et un bloc décisionnel 30 pour la surveillance de la poursuite.

La description effectuée s'est focalisée sur les récepteurs GPS mais l'invention n'est bien entendu pas limitée à ce type de récepteur de positionnement par satellites mais peut être transposée à d'autres types de récepteur tels que les récepteurs GLONASS, GALILEO etc.

## Revendications

1. Procédé de surveillance continue d'une boucle de poursuite (10) d'un signal reçu (S) d'un satellite, ledit signal étant acquis par un récepteur de positionnement par satellites au travers d'un canal associé audit satellite, ladite boucle (10) étant pilotée par des résultats de corrélation ($I^E$, $Q^E$, $I^P$, $Q^P$, $I^L$, $Q^L$), déterminés au moyen de corrélateurs de pilotage (E, P, L), centrés sur un pic de corrélation du signal reçu (S) et prenant en considération le signal reçu (S) et des signaux de réplique ($S_{RE}$, $S_{RP}$, $S_{RL}$) décalés temporellement les uns par rapport aux autres, **caractérisé en ce qu'**on détermine une pluralité d'énergies ($E^{VE1}$, $E^{VE2}$..., $E^{VEC}$) au moyen d'une pluralité de corrélateurs avancés de surveillance ($VE_1$, $VE_2$, ..., $VE_C$) prenant en considération le signal reçu (S) et des signaux de réplique temporellement avancés ($S_{R1}$, ..., $S_{RC}$) par rapport aux signaux de réplique ($S_{RE}$, $S_{RP}$, $S_{RL}$) utilisés par les corrélateurs de pilotage (E, P, L), et **en ce qu'**on compare au moyen d'un détecteur (30), chacune des énergies ($E^{VE1}$, $E^{VE2}$..., $E^{VEC}$) issues des résultats de corrélation obtenus au moyen des corrélateurs avancés de surveillance ($VE_1$, $VE_2$, ..., $VE_C$) à un seuil (V) de manière à surveiller que le pic de corrélation sur lequel sont centrés les corrélateurs de pilotage est relatif au trajet direct du signal reçu (S), ledit seuil (V) étant fonction de l'estimation de l'énergie du bruit en sortie des corrélateurs et d'une probabilité de fausse alarme allouée au détecteur (30).

2. Procédé selon la revendication précédente, **caractérisé en ce que** les signaux de réplique ($S_{R1}$, ..., $S_{RC}$) sont décalés les uns par rapport aux autres de DE/2 chip, DE étant typiquement égal à un, **en ce que** les signaux de réplique $S_{RC}$ et $S_{RE}$ sont décalés l'un par rapport à l'autre d'un chip, et **en ce que** les signaux ($S_{RE}$, $S_{RP}$, $S_{RL}$) sont décalés les uns par rapport aux autres de D/2 chip, D étant typiquement égal à 1.

3. Procédé selon l'une des revendications 1 à 2, **caractérisé en ce que** dans le cas où une énergie parmi les énergies ($E^{VE1}$, $E^{VE2}$..., $E^{VEC}$) issues des résultats de corrélation obtenus par les corrélateurs de surveillance d'un canal est supérieure ou égale au seuil (V), on invalide les mesures associées au satellite poursuivi pour ne pas les utiliser notamment dans le calcul de la position du récepteur.

4. Procédé selon l'une des revendications 1 à 2, **caractérisé en ce que** dans le cas où une énergie parmi les énergies ($E^{VE1}$, $E^{VE2}$..., $E^{VEC}$) déterminées par les corrélateurs de surveillance est supérieure ou égale au seuil (V), on relance l'acquisition du signal (S) en initialisant ladite acquisition en avance du corrélateur ayant détecté l'énergie supérieure audit seuil (V).

5. Procédé selon l'une des revendications 1 à 2, **caractérisé en ce que** dans le cas où une énergie de corrélation parmi les énergies ($E^{VE1}$, $E^{VE2}$..., $E^{VEC}$) déterminées sur les corrélateurs de surveillance d'un canal est supérieure ou égale au seuil (V), on décale la poursuite du signal en centrant les corrélateurs de pilotage sur l'emplacement du corrélateur de surveillance pour lequel on a détecté le pic d'énergie de corrélation.

6. Procédé selon l'une des revendications précédentes, **caractérisé en ce que** les signaux de répliques alimentant les corrélateurs de surveillance ($VE_1$, $VE_2$, ..., $VE_C$) et de poursuite (E, P, L) sont obtenus par décalage temporel au moyen d'un registre à décalage (70) du signal de réplique ($S_R$).

7. Procédé selon l'une des revendications précédentes, **caractérisé en ce que** les énergies ($E^{VE1}$, $E^{VE2}$..., $E^{VEC}$) issues des résultats de corrélation obtenus au moyen des corrélateurs de surveillance sont calculées en cumulant N fois, de manière non cohérente, l'énergie de corrélation calculée de manière cohérente sur k millisecondes, ladite énergie de corrélation cohérente étant la somme du résultat de corrélation en phase ($I_i$) élevé au carré avec le résultat de corrélation en quadrature ($Q_i$) élevé au carré.

8. Procédé selon la revendication 7, **caractérisé en ce que** k et N sont au moins fonction de la probabilité de fausse alarme allouée au détecteur (30).

9. Procédé selon la revendication précédente, **caractérisé en ce que** k est par exemple égal à 5ms et N est égal à 20.

10. Procédé selon l'une des revendications précédentes, **caractérisé en ce que** les signaux de réplique alimentant les corrélateurs de poursuite et de surveillance sont adjacents.

11. Procédé selon l'une des revendications précédentes, **caractérisé en ce qu'**il est mis en oeuvre dans chaque canal pour la poursuite d'un signal reçu (S) d'un satellite.

12. Récepteur de positionnement par satellites comprenant sur un canal associé à un satellite, comprenant

   - des boucles de poursuite (10) d'un signal reçu (S) d'un satellite,
   - des corrélateurs de pilotage (E, P, L) centrés sur un pic de corrélation du signal reçu (S) et prenant en considération le signal reçu (S) et des signaux de réplique ($S_{RE}$, $S_{RP}$, $S_{RL}$) décalés temporellement les uns par rapport aux autres,

   **caractérisé en ce qu'**il comprend en outre une pluralité de corrélateurs avancés de surveillance ($VE_1$, $VE_2$, ..., $VE_C$) prenant en considération le signal reçu (S) et des signaux de réplique temporellement avancés ($S_{R1}$, ..., $S_{RC}$) par rapport aux signaux de réplique ($S_{RE}$, $S_{RP}$, $S_{RL}$) utilisés par les corrélateurs de pilotage (E, P, L),

   - un détecteur (30) pour comparer chacune des énergies ($E^{VE1}$, $E^{VE2}$..., $E^{VEC}$) issues des résultats de corrélation obtenus au moyen des corrélateurs avancés de surveillance ($VE_1$, $VE_2$, ..., $VE_C$) à un seuil (V) de manière à surveiller que le pic de corrélation sur lequel sont centrés les corrélateurs de pilotage est relatif au trajet direct du signal reçu (S), ledit seuil (V) étant fonction de l'estimation de l'énergie du bruit en sortie des corrélateurs et d'une probabilité de fausse alarme allouée au détecteur.

**Claims**

1. A method for continuous monitoring a loop (10) for tracking a signal (S) received from a satellite, said signal being acquired by a satellite positioning receiver through a channel associated with said satellite, said loop (10) being driven by correlation results ($I^E$, $Q^E$, $I^P$, $Q^P$, $I^L$, $Q^L$), determined by means of control correlators (E, P, L), centered on a correlation peak of the received signal (S) and taking into consideration the received signal (S) and replica signals ($S_{RE}$, $S_{RP}$, $S_{RL}$) time-shifted relatively to each other,
   **characterized in that** a plurality of energies ($E^{VE1}$, $E^{VE2}$..., $E^{VEC}$) is determined by means of a plurality of advanced monitoring correlators ($VE_1$, $VE_2$..., $VE_C$) taking into consideration the received signal (S) and replica signals ($S_{R1}$, ..., $S_{RC}$) time-advanced relatively to the replica signals ($S_{RE}$, $S_{RP}$, $S_{RL}$) used by the control correlators (E, P, L), and **in that** each of the energies ($E^{VE1}$, $E^{VE2}$..., $E^{VEC}$) from the correlation results obtained by means of the advanced monitoring correlators ($VE_1$, $VE_2$..., $VE_C$) is compared by means of a detector (30), with a threshold in order to monitor whether the correlation peak on which the control correlators are centered, is relative to the direct path of the received signal (S), said threshold (V) depending on the estimation of the noise energy at the output of the correlators and on a false alarm probability allocated to the detector (30).

2. The method according to the preceding claim, **characterized in that** the replica signals ($S_{R1}$, ..., $S_{RC}$) are time-shifted relatively to each other by DE/2 chip, DE being typically equal to one, **in that** the replica signals $S_{RC}$ and $S_{RE}$ are shifted relatively to each other by one chip, and **in that** the signals ($S_{RE}$, $S_{RP}$, $S_{RL}$) are shifted relatively to each other by D/2 chip, D being typically equal to 1.

3. The method according to any of claims 1 to 2, **characterized in that** in the case when one energy among the energies ($E^{VE1}$, $E^{VE2}$..., $E^{VEC}$) from the correlation results obtained by the monitoring correlators of a channel, is larger than or equal to the threshold (V), the measurements associated with the tracked satellite are invalidated so that they are not used notably in calculating the position of the receiver.

4. The method according to any of claims 1 to 2, **characterized in that** in the case when one energy among the energies ($E^{VE1}$, $E^{VE2}$..., $E^{VEC}$) determined by the monitoring correlators is larger than or equal to the threshold (V), acquisition of the signal (S) is reinitiated by resetting said acquisition in advance of the correlator having detected the energy larger than said threshold (V).

5. The method according to any of claims 1 to 2, **characterized in that** in the case when one correlation energy among the energies ($E^{VE1}$, $E^{VE2}$..., $E^{VEC}$) determined by the monitoring correlators of a channel is larger than or equal to the threshold (V), the tracking of the signal is shifted by centering the control correlators on the location of the monitoring correlator for which the correlation energy peak was detected.

6. The method according to any of the preceding claims, **characterized in that** the replica signals feeding the monitoring correlators ($VE_1$, $VE_2$..., $VE_C$) and tracking correlators (E, P, L) are obtained by time-shifting the replica signal ($S_R$) by means of a shift register (70).

7. The method according to any of the preceding claims, **characterized in that** the energies ($E^{VE1}$, $E^{VE2}$..., $E^{VEC}$) from the correlation results obtained by means of monitoring correlators are calculated by accumulating N times, in a non-coherent way, the correlation energy calculated in a coherent way over k milliseconds, said coherent correlation energy being the sum of the squared phase correlation result ($I_i$) with the squared quadrature correlation result ($Q_i$).

8. The method according to claim 7,
   **characterized in that** k and N depend on at least on the false alarm probability allocated to the detector (30).

9. The method according to the preceding claim, **characterized in that** k is for example equal to 5ms and N is equal to 20.

10. The method according to any of the preceding claims, **characterized in that** the replica signals feeding the tracking and monitoring correlators are adjacent.

11. The method according to any of the preceding claims, **characterized in that** it is applied in each channel for tracking a signal (S) received from a satellite.

12. A satellite positioning receiver comprising on a channel associated with a satellite, the satellite positioning receiver comprising

- loops (10) for tracking a signal (S) received from a satellite,
- control correlators (E, P, L) centered on a correlation peak of the received signal (S) and taking into consideration the received signal (S) and replica signals ($S_{RE}$, $S_{RP}$, $S_{RL}$) time-shifted relatively to each other,

**characterized in that** it further comprises a plurality of advanced monitoring correlators ($VE_1$, $VE_2$..., $VE_C$) taking into consideration the received signal (S) and the time-advanced replica signals ($S_{R1}$, ... $S_{RC}$) relatively to the replica signals ($S_{RE}$, $S_{RP}$, $S_{RL}$) used by the control correlators (E, P, L).

- a detector (30) for comparing each of the energies ($E^{VE1}$, $E^{VE2}$..., $E^{VEC}$) from the correlation results obtained by means of advanced monitoring correlators ($VE_1$, $VE_2$..., $VE_C$) with a threshold (V) so as to monitor whether the correlation peak on which the control correlators are centered is relative to the direct path of the received signal (S), said threshold (V) depending on the estimation of the noise energy at the output of the correlators and on a false alarm probability allocated to the detector.

**Patentansprüche**

1. Verfahren zur kontinuierlichen Überwachung einer Verfolgungsschleife (10) eines von einem Satelliten empfangenen Signals (S), wobei das Signal von einem satellitengesteuerten Positionsempfänger durch einen dem Satelliten zugeordneten Kanal erfasst wird, wobei die Schleife (10) durch Korrelationsergebnisse ($I^E$, $Q^E$, $I^P$, $Q^P$, $I^L$, $Q^L$) gesteuert wird, die mittels Steuerkorrelatoren (E, P, L) bestimmt werden, die auf einer Korrelationsspitze des empfangenen Signals (S) zentriert sind und das empfangene Signal (S) und zeitlich zueinander versetzte Antwortsignale ($S_{RE}$, $S_{RP}$, $S_{RL}$) berücksichtigen,
dadurch gekennzeichnet, dass eine Vielzahl von Energien ($E^{VE1}$, $E^{VE2}$..., $E^{VEC}$) mittels einer Vielzahl von nach vorne verschobenen Überwachungskorrelatoren ($VE_1$, $VE_2$, ..., $VE_C$) bestimmt wird, die das empfangene Signal (S) und Antwortsignale ($S_{R1}$, ..., $S_{RC}$), die zeitlich nach vorne in Bezug auf die von den Steuerkorrelatoren (E, P, L) benutzten Antwortsignale ($S_{RE}$, $S_{RP}$, $S_{RL}$) verschoben sind, berücksichtigen, und dass mittels eines Detektors (30) jede der Energien ($E^{VE1}$, $E^{VE2}$..., $E^{VEC}$), die aus den Korrelationsergebnissen stammen, die mittels der nach vorne verschobenen Überwachungskorrelatoren ($VE_1$, $VE_2$, ..., $VE_C$) erhalten werden, mit einem Schwellwert (V) verglichen wird, um zu überwachen, dass die Korrelationsspitze, auf der die Steuerkorrelatoren zentriert sind, sich auf die direkte Bahn des empfangenen Signals (S) bezieht, wobei der Schwellwert (V) von der Schätzung der Energie des Rauschens am Ausgang der Korrelatoren und von einer dem Detektor (30) zugewiesenen Fehlalarmwahrscheinlichkeit abhängt.

2. Verfahren gemäß dem vorhergehenden Ansprüche, dadurch gekennzeichnet, dass die Antwortsignale ($S_{R1}$, ..., $S_{RC}$) zueinander um DE/2 Chip versetzt sind, wobei DE typischerweise gleich eins ist, dass die Antwortsignale $S_{RC}$ und $S_{RE}$ zueinander um einen Chip versetzt sind, und dass die Signale ($S_{RE}$, $S_{RP}$, $S_{RL}$) zueinander um D/2 Chip versetzt sind, wobei D typischerweise gleich 1 ist.

3. Verfahren gemäß einem der Ansprüche 1 bis 2, dadurch gekennzeichnet, dass in dem Fall, in dem eine Energie unter den Energien ($E^{VE1}$, $E^{VE2}$..., $E^{VEC}$), die aus den Korrelationsergebnisse stammen, die von den Überwachungskorrelatoren eines Kanals erhalten werden, größer oder gleich dem Schwellwert (V) ist, die dem verfolgten Satelliten zugeordneten Messungen für ungültig erklärt werden, um sie insbesondere nicht bei der Berechung der Position des Empfängers zu benutzen.

4. Verfahren gemäß einem der Ansprüche 1 bis 2, dadurch gekennzeichnet, dass in dem Fall, in dem eine Energie unter den Energien ($E^{VE1}$, $E^{VE2}$..., $E^{VEC}$), die von den Überwachungskorrelatoren bestimmt werden, größer oder gleich dem Schwellwert (V) ist, die Erfassung des Signals (S) erneut vorgenommen wird, indem die Erfassung vor dem Korrelator initialisiert wird, der die Energie oberhalb des Schwellwerts (V) detektiert hat.

5. Verfahren gemäß einem der Ansprüche 1 bis 2, dadurch gekennzeichnet, dass in dem Fall, in dem eine Korrelationsenergie unter den Energien ($E^{VE1}$, $E^{VE2}$... $E^{VEC}$), die auf den Überwachungskorrelatoren eines Kanals bestimmt werden, größer oder gleich dem Schwellwert (V) ist, die Verfolgung des Signals versetzt wird, indem die Steuerkorrelatoren auf der Stelle des Überwachungskorrelators zentriert werden, für den die Korrelationsenergiespitze detektiert wurde.

6. Verfahren gemäß einem der vorhergehenden Ansprüche, **dadurch gekennzeichnet, dass** die Antwortsignale, die die Überwachungs- ($VE_1$, $VE_2$, ..., $VE_C$) und Verfolgungskorrelatoren (E, P, L) versorgen, durch zeitliche Verschiebung mittels eines Schieberegisters (70) des Antwortsignals ($S_R$) erhalten werden.

7. Verfahren gemäß einem der vorhergehenden Ansprüche, **dadurch gekennzeichnet, dass** die Energien ($E^{VE1}$, $E^{VE2}$..., $E^{VEC}$), die aus den Korrelationsergebnissen stammen, die mittels der Überwachungskorrelatoren erhalten werden, berechnet werden, indem man N Mal auf nicht kohärente Weise die auf kohärente Weise berechnete Korrelationsenergie über k Millisekunden kumuliert, wobei die kohärente Korrelationsenergie die Summe des Korrelationsergebnisses in Phase ($I_i$) im Quadrat und des um 90˚ phasenverschobenen Korrelationsergebnisses ($Q_i$) im Quadrat ist.

8. Verfahren gemäß Anspruch 7, **dadurch gekennzeichnet, dass** k und N wenigstens abhängig von der dem Detektor zugewiesenen Fehlalarmwahrscheinlichkeit (30) sind.

9. Verfahren gemäß dem vorhergehenden Anspruch, **dadurch gekennzeichnet, dass** k zum Beispiel gleich 5ms und N gleich 20 ist.

10. Verfahren gemäß einem der vorhergehenden Ansprüche, **dadurch gekennzeichnet, dass** die Antwortsignale, die die Verfolgungs- und Überwachungskorrelatoren versorgen, benachbart sind.

11. Verfahren gemäß einem der vorhergehenden Ansprüche, **dadurch gekennzeichnet, dass** es in jedem Kanal für die Verfolgung eines von einem Satelliten empfangenen Signals (S) durchgeführt wird.

12. Satellitengesteuerter Positionsempfänger, welcher auf einem einem Satelliten zugeordneten Kanal umfasst:

- Verfolgungsschleifen (10) eines von einem Satelliten empfangenen Signals (S),
- Steuerkorrelatoren (E, P, L), die auf einer Korrelationsspitze des empfangenen Signals (S) zentriert sind und das empfangene Signal (S) und zeitlich zueinander versetzte Antwortsignale ($S_{RE}$, $S_{RP}$, $S_{RL}$) berücksichtigen,

**dadurch gekennzeichnet, dass** er ferner eine Vielzahl von nach vorne verschobenen Überwachungskorrelatoren (VE1, VE2, ..., VEc) umfasst, die das empfangene Signal (S) und Antwortsignale ($S_{R1}$,...,$S_{RC}$), die zeitlich nach vorne in Bezug auf die von den Steuerkorrelatoren (E, P, L) benutzten Antwortsignale ($S_{RE}$, $S_{RP}$, $S_{RL}$) verschoben sind, berücksichtigen,

- einen Detektor (30), um jede der Energien ($E^{VE1}$, $E^{VE2}$ ..., $E^{VEC}$), die aus den Korrelationsergebnissen stammen, die mittels der nach vorne verschobenen Überwachungskorrelatoren ($VE_1$, $VE_2$, ..., $VE_C$) erhalten werden, mit einem Schwellwert (V) zu vergleichen, um zu überwachen, dass die Korrelationsspitze, auf der die Steuerkorrelatoren zentriert sind, sich auf die direkte Bahn des empfangenen Signals (S) bezieht, wobei der Schwellwert (V) von der Schätzung der Energie des Rauschens am Ausgang der Korrelatoren und von einer dem Detektor zugewiesenen Fehlalarmwahrscheinlichkeit abhängt.

FIG.1a

-1chip +1chip

FIG.1b

FIG.1c

0

FIG.1d

FIG.2a

Corrélation
ponctuelle

FIG.2b

Signal Avance
moins retard

FIG.2c

FIG.3a

Corrélation
ponctuelle

FIG.3b

Signal Avance
moins retard

FIG.3c

FIG.4

FIG.5

**RÉFÉRENCES CITÉES DANS LA DESCRIPTION**

**Documents brevets cités dans la description**

- EP 1143652 A